# EUROPÄISCHE PATENTANMELDUNG

(11) **EP 0 755 711 A1**
(43) Veröffentlichungstag der Anmeldung: **29.01.1997**
(21) Anmeldenummer: 96110929.5
(22) Anmeldetag: 05.07.1996
(51) Int. Cl.: B01D 46/04

(54) **Abgasreinigungsanlage**

(30) Priorität: 28.07.1995 DE 29512238 U
(71) Anmelder: SIEMENS AKTIENGESELLSCHAFT, 80333 München (DE)
(72) Erfinder: Lisson, Johann, Dr., 64291 Darmstadt (DE); Dingeldein, Falk, 63150 Heusenstamm (DE); Gliha, Viktor, 63456 Hanau (DE)

(57) **Zusammenfassung**

Um für eine Abgasreinigungsanlage (1) zur Abscheidung von Staub aus einem Gasstrom einen kontinuierlichen Betrieb und somit eine hohe Zuverlässigkeit und Verfügbarkeit mit einfachen Mitteln zu erreichen, ist erfindungsgemäß in den Gasstrom (A) eine Anzahl von rückblasbaren Filtern (2, 4) redundant in paralleler Anordnung geschaltet, wobei jeder Filter (2, 4) ausgangsseitig über eine Verbindungsleitung (20, 22) an einen Druckbehälter (24) angeschlossen ist. Beim Betrieb einer derartigen Abgasreinigungsanlage (1) wird bei einer erfaßten Verstopfung von einem Filter (2, 4) auf den anderen Filter (2 bzw. 4) umgeschaltet, so daß der verstopfte Filter (2, 4) durch Rückblasen gereinigt werden kann.

## Beschreibung

Die Erfindung bezieht sich auf eine Abgasreinigungsanlage zur Abscheidung von Staub aus einem Gasstrom.

Bei einer Vielzahl von technischen Anlagen ist es, beispielsweise aus Umweltschutzgründen, erforderlich, anfallendes Abgas oder anfallende Abluft einer Reinigungsanlage zuzuführen, bevor das Abgas bzw. die Abluft in die Umgebung freigesetzt wird. So müssen häufig Staubpartikel aus dem Abgas entfernt werden, wobei je nach Art des Staubes unterschiedliche Anforderungen an eine dafür geeignete Abgasreinigungsanlage gestellt werden. Insbesondere bei mit toxischem oder radioaktivem Staub beladenem Abgas, wie es beispielsweise in einer kerntechnischen Anlage anfällt, ist eine hohe Zuverlässigkeit der Abgasreinigungsanlage bei gleichzeitiger ständiger Verfügbarkeit von besonderer Bedeutung. Dabei gehen die Bestrebungen stets auch dahin, zusätzlich anfallenden Abfall, beispielsweise in Form von verstopften Filterelementen, weitestgehend zu vermeiden.

Der Erfindung liegt daher die Aufgabe zugrunde, eine Abgasreinigungsanlage zur Abscheidung von Staub aus einem Gasstrom anzugeben, bei der eine hohe Zuverlässigkeit und eine hohe Verfügbarkeit mit einfachen Mitteln erreicht sind, wobei die durch die Abgasreinigungsanlage zusätzlich anfallende Abfallmenge besonders gering sein soll. Des weiteren soll ein Verfahren zum Betreiben einer derartigen Anlage angegeben werden.

Diese Aufgabe wird für eine Abgasreinigungsanlage der eingangs genannten Art erfindungsgemäß gelöst, indem in den Gasstrom eine Anzahl von rückblasbaren Filtern redundant in paralleler Anordnung geschaltet sind, wobei jeder Filter über eine Verbindungsleitung an einen Druckbehälter angeschlossen ist.

Die Erfindung geht dabei von der Beobachtung aus, daß bei einer mit einem einzelnen Filter versehenen Abgasreinigungsanlage bei einer Filterverstopfung ein Abschalten der Anlage erforderlich ist, was zu Stillstandszeiten führt. Derartige Stillstandszeiten sind durch die redundante parallele Anordnung zweier Filter vermieden. Bei einem Betrieb der Abgasreinigungsanlage durchströmt der Gasstrom einen der Filter. Im Falle einer Verstopfung dieses Filters wird der Gasstrom auf den zu diesem Filter redundant und parallel angeordneten Filter umgeleitet, so daß der verstopfte Filter gereinigt werden kann. Die Verbindung jedes Filters mit einem Druckbehälter ermöglicht dabei die Reinigung eines verstopften Filters durch Rückblasen, ohne daß der verstopfte Filter ausgewechselt und entsorgt werden muß. Somit ist zusätzlicher Abfall in Form eines verstopften Filters vermieden. Durch die redundante Anordnung der Filter ist eine hohe Zuverlässigkeit und eine kontinuierliche Verfügbarkeit der Abgasreinigungsanlage gewährleistet.

Um eine derartige Abgasreinigungsanlage auf besonders einfache Weise zu realisieren, sind vorteilhafterweise alle Filter an einen gemeinsamen Druckbehälter angeschlossen.

Zweckmäßigerweise ist die Verbindungsleitung jedes Filters zum Druckbehälter durch ein Schnellschlußventil absperrbar. Derartige Schnellschlußventile ermöglichen in Verbindung mit an die Anlagengeometrien angepaßten Druckverhältnissen auch im Druckbehälter ein besonders effektives Rückblasen der Filter und somit eine besonders gute Reinigung eines verstopften Filters. Durch die Schnellschlußventile wird dabei ein besonders schneller Druckabbau im Druckbehälter durch einen zu reinigenden Filter hindurch erreicht.

In weiterer vorteilhafter Ausgestaltung weist jeder Filter ein Metallgewebe als Filterfläche auf. Ein derartiges Metallgewebe ist besonders robust hinsichtlich Verschleiß oder Korrosion und zudem leicht zu reinigen. Somit hat ein derartiger Filter eine besonders lange Lebensdauer, so daß die durch eine derartige Abgasreinigungsanlage anfallenden zusätzlich Abfälle besonders gering sind.

Bezüglich des Verfahrens zum Betreiben einer derartigen Anlage wird die genannte Aufgabe gelöst, indem bei Überschreiten einer vorgebbaren Druckdifferenz zwischen Einlaß und Auslaß eines der Filter ein Umschalten von dem einen auf den anderen Filter erfolgt, wobei ein Filter im Filterbetrieb arbeitet und wobei der andere Filter durch Rückblasen mit Druckluft aus dem Druckbehälter gereinigt wird.

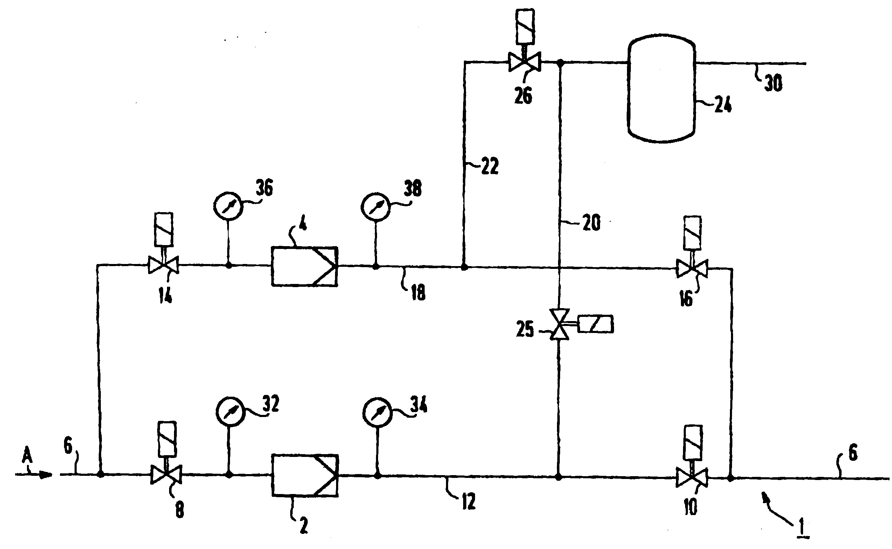

Ein Ausführungsbeispiel der Erfindung wird anhand einer Zeichnung näher erläutert. Darin zeigt die Figur schematisch eine Abgasreinigungsanlage zur Abscheidung von Staub aus einem Gasstrom.

Die Abgasreinigungsanlage 1 umfaßt einen ersten Filter 2 und einen zweiten Filter 4. Die Filter 2, 4, deren Filterflächen in nicht näher dargestellter Art und Weise ein Metallgewebe aufweisen, sind redundant in paralleler Anordnung in eine während des Betriebs von Abgas A durchströmte Abgasleitung 6 geschaltet. Dazu ist der Filter 2 in ein erstes, durch Magnetventile 8, 10 absperrbares Leitungsteilstück 12 und der Filter 4 in ein zweites, durch Magnetventile 14, 16 absperrbares und zum ersten Leitungsteilstück 12 parallel angeordnetes zweites Leitungsteilstück 18 geschaltet. In Strömungsrichtung des Abgases A hinter den Filtern 2, 4 sind Verbindungsleitungen 20 bzw. 22 vorgesehen, die mit einem beiden Filtern 2, 4 gemeinsamen Druckbehälter 24 verbunden sind. Die Verbindungsleitungen 20, 22 sind jeweils über ein Magnetventil 25 bzw. 26 absperrbar. Am Druckbehälter 24 ist eine Gaszuleitung 30 angeschlossen. Die Magnetventile 8, 10, 14, 16, 25 und 26 wirken als Schnellschlußventile.

In das Leitungsteilstück 12 ist in Strömungsrichtung des Abgases A vor dem Filter 2 ein erstes Druckmeßgerät oder Manometer 32 geschaltet. In Strömungsrichtung des Abgases A hinter dem Filter 2 ist ein zweites Druckmeßgerät oder Manometer 34 vorgesehen. In analoger Anordnung weist die Verbindungsleitung 18 ein drittes Druckmeßgerät oder Manometer 36 und ein viertes Druckmeßgerät oder Manometer 38 auf.

Bei einem Betrieb der Abgasreinigungsanlage 1 durchströmt das Abgas A oder der Gasstrom die Abgasleitung 6. Dabei sind beispielsweise die Magnetventile 14, 16, 24 und 26 geschlossen und die Magnetventile 8 und 10 geöffnet, so daß das Abgas A über das erste Leitungsstück 12 und den in dieses geschalteten ersten Filter 2 geführt wird. Dabei wird das Abgas A von Staubpartikeln, wie beispielsweise Schmutz, Abrieb oder Korrosionsteilchen, gereinigt. Zum Nachweis einer möglichen Verstopfung des Filters 2 wird die Druckdifferenz zwischen Einlaß und Auslaß des Filters 2 durch die Druckmeßgeräte 32 und 34 ermittelt. Falls die so ermittelte Druckdifferenz einen vorgebbaren zulässigen Grenzwert, der ein Verstopfen des Filters 2 signalisiert, übersteigt, werden die Magnetventile 8 und 10 geschlossen, bevor die Magnetventile 14 und 16 geöffnet werden. Somit wird nunmehr das Abgas A über das zweite Leitungsstück 18 und den in dieses geschalteten Filter 4 geführt und dort gereinigt. Durch ein derartiges Umschalten zwischen den in redundanter Anordnung parallel geschalteten Filtern 2 und 4 ist somit auch bei Verstopfen eines der Filter 2 bzw. 4 ein kontinuierlicher Betrieb der Abgasreinigungsanlage 1 gewährleistet.

Durch ein derartiges Abkoppeln des verunreinigten Filters 2 vom Abgasstrom kann dieser gereinigt werden, ohne daß der Betrieb der Abgasreinigungsanlage 1 behindert wird. Dazu wird das in die Verbindungsleitung 20 vom Druckbehälter 24 zum ersten Leitungsstück 12 geschaltete Schnellschlußventil 25 geöffnet. Beim schnellen Öffnen des Schnellschlußventils 25 entspannt sich der unter Überdruck stehende Inhalt des Druckbehälters 24 derart, daß der Filter 2 rückgeblasen und somit gereinigt wird. Das Volumen des Druckbehälters 24 ist dabei derart bemessen, daß beim Öffnen des Schnellschlußventils 25 eine interne Entspannung erfolgt, bei der ein Ablassen von Gasen an die Umgebungsluft nicht erforderlich ist. Somit ist der Betrieb der Abgasreinigungsanlage 1 in Form eines geschlossenen Systems ermöglicht, so daß eine Verunreinigung der Umgebung vermieden ist.

Die Verwendung von Metallgewebe für den Filter 2 und den Filter 4 erweist sich dabei als besonders vorteilhaft, da ein Metallgewebe gegenüber einem derartigen Rückblasen und auch gegenüber einer Korrosion besonders beständig ist.

Durch die Verwendung von Magnetventilen wird ein besonders schneller Druckausgleich bei der Entspannung des Inhalts des Druckbehälters 24 erreicht, was in der Art eines Stoßeffekts eine besonders effektive Reinigung des Filters 2 ermöglicht.

Nach einer derartigen Reinigung des Filters 2 wird das Schnellschlußventil 25 geschlossen. Danach wird der Druckbehälter 24 durch kontinuierliches Zuführen von Druckluft über die Gaszuleitung 30 wieder mit Druckluft beaufschlagt, so daß ein erneuter Reinigungsvorgang möglich ist. Die durch die Reinigung aus dem Filter 2 herausgelösten Filtratstoffe werden einer nicht dargestellten Entleerungsvorrichtung und sodann einer Weiterverarbeitung zugeführt.

Die Reinigung des Abgases A über den Filter 4 wird so lange fortgesetzt, bis dieser verstopft ist, was wiederum anhand der Druckdifferenz zwischen den Druckmeßgeräten 36 und 38 feststellbar ist. In diesem Fall wird das Abgas A über den Filter 2 geführt, so daß der Filter 4 in analoger Weise gereinigt werden kann.

Die Abgasreinigungsanlage 1 ist somit kontinuierlich betreibbar und weist daher neben einer hohen Zuverlässigkeit auch eine hohe Verfügbarkeit auf. Durch die Verwendung eines für die Filter 2 und 4 gemeinsamen Druckbehälters 24 ist ein kontinuierlicher Betrieb der Abgasreinigungsanlage 1 auch mit einfachen Mitteln gewährleistet.

Eine nach dem beschriebenen Verfahren arbeitende Reinigungsanlage ist auch zur Reinigung von flüssigen Abfällen einsetzbar, wobei dann bei Bedarf einige Bauteile an die Erfordernisse zur Behandlung von Flüssigkeiten anzupassen sind.

## Patentansprüche

1. Abgasreinigungsanlage (1) zur Abscheidung aus einem Gasstrom, in den eine Anzahl von rückblasbaren Filtern (2, 4) redundant in paralleler Anordnung geschaltet sind, wobei jeder Filter (2, 4) ausgangsseitig über eine Verbindungsleitung (20, 22) an einen Druckbehälter (24) angeschlossen ist.

2. Abgasreinigungsanlage (1) nach Anspruch 1, **dadurch gekennzeichnet,** daß alle Filter (2, 4) an einen gemeinsamen Druckbehälter (24) angeschlossen sind.

3. Abgasreinigungsanlage nach Anspruch 1 oder 2, **dadurch gekennzeichnet,** daß die Verbindungsleitung (20, 22) jedes Filters (2, 4) zum Druckbehälter (24) durch ein Schnellschlußventil (25, 26) absperrbar ist.

4. Abgasreinigungsanlage (1) nach einem der Ansprüche 1 bis 3, **dadurch gekennzeichnet,** daß jeder Filter (2, 4) ein Metallgewebe aufweist.
